# EUROPEAN PATENT SPECIFICATION

(11) **EP 3 685 929 B1**
(45) Date of publication and mention of the grant of the patent: **22.02.2023**
(21) Application number: 18858501.2
(22) Date of filing: 21.09.2018
(51) Int. Cl.: B05D 7/14, B05D 7/24, C09D 7/61, C09D 7/40, C09D 201/00, B22F 7/00, B22F 3/11, F28D 15/02, C23C 24/08, B05D 3/02, B22F 7/04

(54) **FILM PREPARATION METHOD**
VERFAHREN ZUR HERSTELLUNG VON FOLIEN
MÉTHODE DE PRÉPARATION DE FILM

(30) Priority: 22.09.2017 KR 20170122575
(43) Date of publication of application: 29.07.2020
(73) Proprietor: LG Chem, Ltd., Seoul 07336 (KR)
(72) Inventor: KIM, So Jin, Daejeon 34122 (KR); SHIN, Jong Min, Daejeon 34122 (KR); YOO, Dong Woo, Daejeon 34122 (KR)
(74) Representative: Goddar, Heinz J.
(86) International application number: PCT/KR2018/011303
(87) International publication number: WO 2019/059731

(56) References cited:
- EP-A1- 3 437 767
- EP-A1- 3 549 700
- WO-A1-2016/151916
- JP-A- H09 119 789
- JP-A- 2005 290 493
- JP-A- 2013 145 835
- JP-A- 2017 028 018
- KR-A- 20140 116 074

## Description

### Technical Field

The present application relates to a method for producing a film.

### Background Art

Heat-dissipating materials can be used in various applications. For example, since batteries and various electronic apparatuses generate heat during operation, a material capable of effectively controlling such heat is required.

As a typical heat-dissipating material, a film in which a ceramic material having high thermal conductivity or the like is dispersed in a polymer matrix is known. However, these films are generally unsatisfactory in thermal conductivity.

As another heat-dissipating material, a so-called heat pipe is also known. This material is also inexpensive while exhibiting excellent heat dissipation efficiency, and thus has been widely used, recently.

However, the heat pipe is mostly thick, whereby the applied uses are limited.

Patent document JPH 09119789 A discloses a method for making a heat pipe with a porous coating thereon using a slurry with a polyhydric alcohol in its composition.

### Disclosure

### Technical Problem

It is an object of the present application to provide a method for producing a film, for example, a film which can be used for a heat-dissipating material such as a heat pipe.

### Technical Solution

The production method of the present application comprises a step of directly coating a slurry containing thermally conductive metal particles on a metal substrate and sintering it to form a porous metal layer. In this way, the porous metal layer can have high porosity and a small pore size while having a thin thickness, and also have excellent adhesiveness with the metal substrate.

In the present application, the term porous metal layer means a porous structure comprising a metal as a main component. Here, the metal as a main component means that the ratio of the metal is 55 weight% or more, 60 weight% or more, 65 weight% or more, 70 weight% or more, 75 weight% or more, 80 weight% or more, 85 weight% or more, 90 weight% or more, or 95 weight% or more based on the total weight of the metal layer. The upper limit of the ratio of the metal contained as the main component is not particularly limited, and for example, may be 100 weight%.

The term porous property may mean a case where porosity is 30% or more, 40% or more, 50% or more, 60% or more, 70% or more, 75% or more, or 80% or more. The upper limit of the porosity is not particularly limited, and may be, for example, less than about 100%, about 99% or less, or about 98% or less, about 95% or less, or about 90% or less or so. Here, the porosity can be calculated in a known manner by calculating the density of the metal layer.

In the production method of the present application, the slurry comprises thermally conductive metal particles.

In one example, the metal particles may have thermal conductivity of about 8 W/mK or more, about 10 W/mK or more, about 15 W/mK or more, about 20 W/mK or more, about 25 W/mK or more, about 30 W/mK or more, about 35 W/mK or more, about 40 W/mK or more, about 45 W/mK or more, about 50 W/mK or more, about 55 W/mK or more, about 60 W/mK or more, about 65 W/mK or more, about 70 W/mK or more, about 75 W/mK or more, about 80 W/mK or more, about 85 W/mK or more, or about 90 W/mK or more. The higher the thermal conductivity of the metal particles, the film having more excellent heat dissipation efficiency can be obtained, and thus the upper limit is not particularly limited, which may be, for example, about 1,000 W/mK or less or so.

Among physical properties mentioned in this specification, when the measured temperature affects relevant physical properties, the physical properties are physical properties measured at room temperature, unless otherwise specified. The term room temperature is a natural temperature without being heated or cooled, which may be, for example, any temperature in a range of 10°C to 30°C, or a temperature of about 23°C or about 25°C or so.

The specific kind of the metal particles is not particularly limited as long as they have the above-mentioned thermal conductivity, and for example, may be any one selected from the group consisting of copper, gold, silver, aluminum, silver, nickel, iron, cobalt, magnesium, molybdenum, tungsten, platinum, magnesium and zinc, or an alloy of two or more of the foregoing, but is not limited thereto.

The shape of the metal particles may be appropriately selected in consideration of porosity, pore size or pore shape of the desired porous metal layer. For example, the metal particles may have various shapes such as a substantially spherical shape, a needle shape, a plate shape, a dendrite shape, or a star shape.

In one example, the average particle diameter of the metal particles may be in a range of about 100 nm to 200 µm. Within the above range, the average particle diameter can be suitably selected in consideration of porosity, pore size or pore shape of the desired porous metal layer, and the like.

In one example, the slurry may comprise at least a metal having appropriate relative magnetic permeability and conductivity. If an induction heating method is applied when the slurry is sintered according to one example of the present application, the application of such a metal can smoothly perform the sintering according to the relevant method.

For example, as the metal, a metal having relative magnetic permeability of 90 or more may be used. Here, the relative magnetic permeability (µᵣ) is a ratio (µ/µ₀) of the magnetic permeability (µ) of the relevant material to the magnetic permeability (µ₀) in the vacuum. The metal used in the present application may have relative magnetic permeability of 95 or more, 100 or more, 110 or more, 120 or more, 130 or more, 140 or more, 150 or more, 160 or more, 170 or more, 180 or more, 190 or more, 200 or more, 210 or more, 220 or more, 230 or more, 240 or more, 250 or more, 260 or more, 270 or more, 280 or more, 290 or more, 300 or more, 310 or more, 320 or more, 330 or more, 340 or more, 350 or more, 360 or more, 370 or more, 380 or more, 390 or more, 400 or more, 410 or more, 420 or more, 430 or more, 440 or more, 450 or more, 460 or more, 470 or more, 480 or more, 490 or more, 500 or more, 510 or more, 520 or more, 530 or more, 540 or more, 550 or more, 560 or more, 570 or more, 580 or more, or 590 or more. As the relative magnetic permeability has a higher value, it generates higher heat at the time of applying an electromagnetic field for induction heating to be described below, and thus the upper limit is not particularly limited. In one example, the upper limit of the relative magnetic permeability may be, for example, about 300,000 or less.

The metal may be a metal or an alloy thereof having conductivity at 20°C of about 8 MS/m or more, 9 MS/m or more, 10 MS/m or more, 11 MS/m or more, 12 MS/m or more, 13 MS/m or more, or 14.5 MS/m or more. The upper limit of the conductivity is not particularly limited, and may be, for example, about 30 MS/m or less, 25 MS/m or less, or 20 MS/m or less.

In the present application, the metal having the relative magnetic permeability and conductivity may also be simply referred to as a conductive magnetic metal.

By applying the conductive magnetic metal, sintering can be more effectively performed when an induction heating process to be described below is performed. Such a metal can be exemplified by nickel, iron or cobalt, and the like, but is not limited thereto.

The slurry comprises a binder. The binder is at least one selected from the group consisting of alkyl cellulose, polyalkylene carbonate, polyvinyl alcohol and polyvinyl acetate.

The ratio of each component can be adjusted in consideration of process efficiency such as a coating property and moldability upon the process using the slurry.

In the slurry, the binder is included in a ratio of about 5 to 200 parts by weight relative to 100 parts by weight of the above-described metal particles. In another example, the ratio may be about 10 parts by weight or more, about 15 parts by weight or more, about 20 parts by weight or more, or about 25 parts by weight or more, or may be about 190 parts by weight or less, 180 parts by weight or less, 170 parts by weight or less, 160 parts by weight or less, 150 parts by weight or less, 140 parts by weight or less, 130 parts by weight or less, 120 parts by weight or less, 110 parts by weight or less, 100 parts by weight or less, 90 parts by weight or less, 80 parts by weight or less, 70 parts by weight or less, 60 parts by weight or less, 50 parts by weight or less, or 40 parts by weight or less.

In this specification, the unit part by weight means a weight ratio between the respective components, unless otherwise specified.

The slurry comprises dispersant. Here, as the dispersant, an alcohol is applied. As the alcohol, a monohydric alcohol having 1 to 20 carbon atoms such as methanol, ethanol, propanol, pentanol, octanol, ethylene glycol, propylene glycol, pentanol, 2-methoxyethanol, 2-ethoxyethanol, 2-butoxyethanol, glycerol, texanol, or terpineol, may be used.

In the slurry, the dispersant is contained in a ratio of about 10 to 500 parts by weight relative to 100 parts by weight of the metal particles. In another example, the ratio may be about 20 parts by weight or more, 30 parts by weight or more, 40 parts by weight or more, 50 parts by weight or more, 60 parts by weight or more, 70 parts by weight or more, 80 parts by weight or more, 90 parts by weight or more, 100 parts by weight or more, 110 parts by weight or more, 120 parts by weight or more, 130 parts by weight or more, 140 parts by weight or more, 150 parts by weight or more, or 160 parts by weight or more, and may be about 490 parts by weight or less, 480 parts by weight or less, 470 parts by weight or less, 460 parts by weight or less, 450 parts by weight or less, 440 parts by weight or less, 430 parts by weight or less, 420 parts by weight or less, 410 parts by weight or less, 400 parts by weight or less, 390 parts by weight or less, 380 parts by weight or less, 370 parts by weight or less, 360 parts by weight or less, 350 parts by weight or less, 340 parts by weight or less, 330 parts by weight or less, 320 parts by weight or less, 310 parts by weight or less, 300 parts by weight or less, 290 parts by weight or less, 280 parts by weight or less, 270 parts by weight or less, 260 parts by weight or less, 250 parts by weight or less, 240 parts by weight or less, 230 parts by weight or less, 220 parts by weight or less, 210 parts by weight or less, 200 parts by weight or less, 190 parts by weight or less, or 180 parts by weight or less or so.

The slurry may, if necessary, further comprise a solvent. As the solvent, an appropriate solvent may be used in consideration of solubility of the slurry component, for example, the metal particles or the binder, and the like. For example, as the solvent, those having a dielectric constant within a range of about 10 to 120 can be used. In another example, the dielectric constant may be about 20 or more, about 30 or more, about 40 or more, about 50 or more, about 60 or more, or about 70 or more, or may be about 110 or less, about 100 or less, or about 90 or less. Such a solvent may be exemplified by water, an alcohol having 1 to 8 carbon atoms such as ethanol, butanol or methanol, DMSO (dimethyl sulfoxide), DMF (dimethyl formamide) or NMP (N-methylpyrrolidinone), and the like, but is not limited thereto.

When a solvent is applied, it may be present in the slurry at a ratio of about 50 to 400 parts by weight relative to 100 parts by weight of the binder, but is not limited thereto.

The slurry may also comprise, in addition to the above-mentioned components, known additives which are additionally required.

The method of the present application comprises a step of pattern-printing such a slurry on the metal substrate. Here, the pattern-printing means that the slurry is formed on the metal substrate in a predetermined pattern. At this time, the shape of the pattern to be applied is not particularly limited, which may be selected in consideration of the applied uses of the film and the like. For example, the film can be applied to the manufacture of heat pipes, and in this case, the porous metal layer can act as a so-called wick of a heat pipe. In the heat pipe, the wick may serve as a passage through which a fluid or the like moves, and the pattern may be determined such that the flow of the fluid can be smoothly performed. Various patterns that the flow of the fluid can be smoothly performed are known in the related industry, and in the present application, all of these contents can be applied.

The method of pattern-printing a slurry on a substrate is not particularly limited, which can be performed by using suitable printing means, for example, various dispensers or the like.

A thermally conductive substrate may also be used as the metal substrate. In one example, the substrate may have thermal conductivity of about 8 W/mK or more, about 10 W/mK or more, about 15 W/mK or more, about 20 W/mK or more, about 25 W/mK or more, about 30 W/mK or more, about 35 W/mK or more, about 40 W/mK or more, about 45 W/mK or more, about 50 W/mK or more, about 55 W/mK or more, about 60 W/mK or more, about 65 W/mK or more, about 70 W/mK or more, about 75 W/mK or more, about 80 W/mK or more, about 85 W/mK or more, or about 90 W/mK or more. As the metal substrate has higher thermal conductivity, the film having more excellent heat dissipation efficiency may be obtained, and thus the upper limit is not particularly limited, which may be, for example, about 1,000 W/mK or less or so.

The specific type of the metal substrate is not particularly limited as long as it has the above-mentioned thermal conductivity, which may be, for example, a substrate of any one selected from the group consisting of SUS (stainless steel), copper, gold, silver, aluminum, silver, nickel, iron, cobalt, magnesium, molybdenum, tungsten, platinum, magnesium and zinc, or an alloy of two or more thereof, but is not limited thereto.

In one example, the metal substrate may be the same material as the thermally conductive particles in the slurry, or may be a substrate of different material.

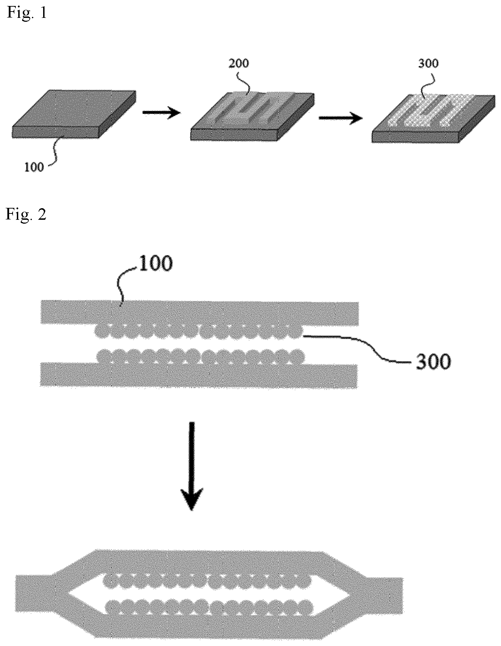

In the present application, a porous metal layer is formed through a process of pattern-printing a slurry on a metal substrate as above, and then sintering the printed slurry. Fig. 1 schematically shows a process of pattern-printing a slurry (200) on a metal substrate (100) and sintering it to form a metal layer (300).

If necessary, a step of drying the printed slurry under appropriate conditions may also be performed between the printing and sintering processes. When the drying process is performed, the conditions are not particularly limited, and for example, it may be performed at a temperature in a range of about 20°C to 150°C or so for about 20 minutes to 5 hours or so, but is not limited thereto.

Here, the method of performing sintering is not particularly limited, and a known sintering method in which appropriate heat is applied in consideration of the material composition or shape of the printed slurry can be applied. At this time, the sintering temperature and the sintering time to be applied are not particularly limited, which may be set in consideration of the material composition or shape of the slurry.

As a method different from the existing known method, in the present application, the sintering can be performed by an induction heating method. That is, as described above, when the slurry includes the conductive magnetic metal, the induction heating method can be applied. By such a method, it is possible to smoothly manufacture the metal layer having excellent mechanical properties and whose porosity is controlled to the desired level as well as comprising uniformly formed pores.

Here, the induction heating is a phenomenon in which heat is generated from a specific metal when an electromagnetic field is applied. For example, if an electromagnetic field is applied to a metal having a proper conductivity and magnetic permeability, eddy currents are generated in the metal, and Joule heating occurs due to the resistance of the metal. In the present application, a sintering process through such a phenomenon can be performed. In the present application, the sintering of the metal foam can be performed in a short time by applying such a method, thereby ensuring the processability, and simultaneously a metal foam having a small pore size and excellent adhesiveness with the metal substrate while being in the form of a thin film having high porosity can be produced.

Thus, the sintering process may comprise a step of applying heat or electromagnetic fields to the pattern-printed slurry. Here, the application of heat may be performed by treating the pattern-printed slurry at a temperature in a range of about 300°C to 2,000°C for a time in a range of 30 minutes to 10 hours using an appropriate means such as an oven.

Also, the Joule heating occurs due to induction heating phenomenon in the conductive magnetic metal by the application of the electromagnetic field, whereby the structure can be sintered. At this time, the conditions for applying the electromagnetic field are not particularly limited as they are determined depending on the kind and ratio of the conductive magnetic metal in the slurry. For example, the induction heating can be performed using an induction heater formed in the form of a coil or the like. In addition, the induction heating can be performed, for example, by applying a current of 100 A to 1,000 A or so. In another example, the applied current may have a magnitude of 900 A or less, 800 A or less, 700 A or less, 600 A or less, 500 A or less, or 400 A or less. In another example, the current may have a magnitude of about 150 A or more, about 200 A or more, or about 250 A or more.

The induction heating can be performed, for example, at a frequency of about 100 kHz to 1,000 kHz. In another example, the frequency may be 900 kHz or less, 800 kHz or less, 700 kHz or less, 600 kHz or less, 500 kHz or less, or 450 kHz or less. In another example, the frequency may be about 150 kHz or more, about 200 kHz or more, or about 250 kHz or more.

The application of the electromagnetic field for the induction heating can be performed within a range of, for example, about 1 minute to 10 hours. In another example, the application time may be about 10 minutes or more, about 20 minutes or more, or about 30 minutes or more. In another example, the application time may be about 9 hours or less, about 8 hours or less, about 7 hours or less, about 6 hours or less, about 5 hours or less, about 4 hours or less, about 3 hours or less, about 2 hours or less, about 1 hour or less, or about 30 minutes or less.

The above-mentioned induction heating conditions, for example, the applied current, the frequency and the application time, and the like may be changed in consideration of the kind and the ratio of the conductive magnetic metal, as described above.

The sintering may be performed by any one means of the application of heat or electromagnetic fields, or may also be performed by a method of simultaneously applying both, that is, a method of applying appropriate heat together with the application of an electromagnetic field.

The porous metal layer produced according to such a method of the present application may have high porosity and a small pore size while having a thin thickness, and may also have excellent adhesiveness with a metal substrate.

In one example, the metal layer may have an average pore size of 100 µm or less while being porous. Such a pore size can be confirmed by, for example, a method of an SEM (scanning electron microscope) image analysis or the like. The lower limit of the pore size is not particularly limited, which may be, for example, about 1 nm to 1µm or so.

In one example, the metal layer may have porosity of about 30% or more. Here, the porosity can be calculated in a known manner by calculating the density of the metal layer. In another example, the porosity may be 35% or more, 40% or more, 45% or more, 50% or more, 55% or more, 60% or more, or 65% or more, or may be 99% or less, 95% or less, 90% or less, 85% or less, 80% or less, or 75% or less or so.

In one example, the metal layer may have a thickness of about 500µm or less. In another example, the thickness may be about 450µm or less, 400µm or less, 350µm or less, 300µm or less, 250µm or less, 200µm or less, or 150µm or less. The lower limit of the thickness is not particularly limited, which may be, for example, about 1µm or more, 5µm or more, or 10µm or more or so.

The film of the present application produced in such a manner may be applied to various applications, one example of which is application to the manufacture of heat pipes. In this case, a process of attaching two films produced in such a manner to each other is necessary, where this process is described, for example, in Fig. 2. Fig. 2 schematically shows a process of attaching two films, wherein in each film, a metal layer (300) is formed on a metal substrate (100), to each other.

That is, the present application also comprises a step of bonding the edges of the metal substrates of two films produced by the above method in a state where the films are positioned so that the porous metal layers formed on the respective films face each other.

Here, the method of bonding the edges of the metal substrates is not particularly limited, and a known metal attaching method such as welding can be applied.

### Advantageous Effects

In the present application, a method for producing a film which can be applied to production of a heat-dissipating material such as a heat pipe can be provided.

### Brief Description of Drawings

Figs. 1 and 2 are diagrams schematically showing processes disclosed in the present application.
Figs. 3 and 4 are photographs showing the shapes of the films produced in Examples.

### Mode for Invention

Hereinafter, the present application will be specifically described by way of examples, but the scope of the present application is not limited to the following examples.

### Example 1.

### Preparation of slurry

A slurry was prepared by blending copper particle powder (thermal conductivity: 401 W/mK, form: dendrite type, average length: about 40µm) with a binder (polyvinylacetate) and a dispersant (terpinol). Here, the weight of the copper particle powder is about 10 g, the weight of the polyvinylacetate is about 3 g, and the weight of the dispersant (terpinol) is about 17 g.

### Production of film

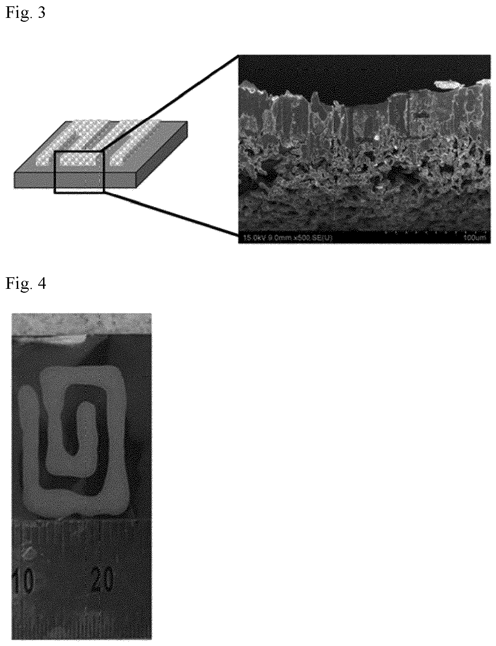

The prepared slurry was pattern-printed on a copper foil as a substrate. The pattern-printed form is as shown in Figs. 3 and 4. Subsequently, it was dried at a temperature of about 120°C for about 1 hour to form a green film. Thereafter, a porous copper layer was formed by heat-treating the green film at a temperature of about 1000°C for about 2 hours in a hydrogen/argon gas atmosphere to remove organic components. The thickness of the formed copper layer was about 21.5µm, and the porosity was about 70% or so.

## Claims

1. A method for producing a film, comprising a step of pattern-printing a slurry on a metal substrate and sintering the pattern-printed slurry to form a porous metal layer on the metal substrate,
wherein the slurry comprises thermally conductive metal particles, a binder and an alcohol;
wherein the binder is at least one selected from the group consisting of alkyl cellulose, polyalkylene carbonate, polyvinyl alcohol and polyvinyl acetate;
wherein the alcohol is a monhydric alcohol having 1 to 20 carbon atom(s),
wherein the slurry comprises the binder in an amount of 5 to 200 parts by weight relative to 100 parts by weight of the thermally conductive metal particles; and
wherein the slurry comprises the alcohol in an amount of 10 to 500 parts by weight relative to 100 parts by weight of the thermally conductive metal particles.

2. The method for producing a film according to claim 1, wherein the thermally conductive metal particles are any one or a mixture of two or more selected from the group consisting of iron particles, cobalt particles, copper particles, gold particles, aluminum particles, silver particles, nickel particles, molybdenum particles, platinum particles and magnesium particles.

3. The method for producing a film according to claim 1, wherein the average particle diameter of the metal particles is in a range of 100nm to 200µm.

4. The method for producing a film according to claim 1, wherein the slurry comprises the binder in an amount of 25 to 160 parts by weight relative to 100 parts by weight of the thermally conductive metal particles and comprises the alcohol in an amount of 50 to 460 parts by weight relative to 100 parts by weight of the thermally conductive metal particles.

5. The method for producing a film according to claim 1, wherein the porous metal layer having a thickness of 1 µm to 500 µm is formed.

6. The method for producing a film according to claim 1, wherein the porous metal layer having an average pore size of 1 nm to 100 µm is formed.

7. The method for producing a film according to claim 1, wherein the porous metal layer having a porosity rate of 30% or more is formed.

8. The method for producing a film according to claim 1, wherein the metal substrate is an iron substrate, an SUS substrate, a copper substrate, a gold substrate, an aluminum substrate, a silver substrate, a nickel substrate, a molybdenum substrate, a platinum substrate or a magnesium substrate.

9. A method for manufacturing a heat pipe, comprising a step of bonding the edges of the metal substrates of two films (100) produced by the method of claim 1 in a state where the films are positioned so that the porous metal layers formed on the respective films face each other.

## Patentansprüche

1. Verfahren zur Herstellung eines Films, umfassend einen Schritt des Musterdruckens einer Aufschlämmung auf ein Metallsubstrat und Sintern der mustergedruckten Aufschlämmung, um eine poröse Metallschicht auf dem Metallsubstrat zu bilden,
bei dem die Aufschlämmung wärmeleitfähige Metallpartikel, ein Bindemittel und einen Alkohol umfasst;
bei dem das Bindemittel mindestens eines ist, das aus der Gruppe ausgewählt ist, die aus Alkylcellulose, Polyalkylencarbonat, Polyvinylalkohol und Polyvinylacetat besteht;
bei dem der Alkohol ein einwertiger Alkohol mit 1 bis 20 Kohlenstoffatom(en) ist, bei dem die Aufschlämmung das Bindemittel in einer Menge von 5 bis 200 Gewichtsteilen bezogen auf 100 Gewichtsteile der wärmeleitfähigen Metallpartikel umfasst; und
bei dem die Aufschlämmung den Alkohol in einer Menge von 10 bis 500 Gewichtsteilen bezogen auf 100 Gewichtsteile der wärmeleitfähigen Metallpartikel umfasst.

2. Verfahren zur Herstellung eines Films nach Anspruch 1, bei dem die wärmeleitfähigen Metallpartikel eines oder eine Mischung von zwei oder mehr sind, die aus der Gruppe ausgewählt sind, die aus Eisenpartikeln, Kobaltpartikeln, Kupferpartikeln, Goldpartikeln, Aluminiumpartikeln, Silberpartikeln, Nickelpartikeln, Molybdänpartikeln, Platinpartikeln und Magnesiumpartikeln besteht.

3. Verfahren zur Herstellung eines Films nach Anspruch 1, bei dem der durchschnittliche Partikeldurchmesser der Metallpartikel in einem Bereich von 100 nm bis 200 µm liegt.

4. Verfahren zur Herstellung eines Films nach Anspruch 1, bei dem die Aufschlämmung das Bindemittel in einer Menge von 25 bis 160 Gewichtsteilen bezogen auf 100 Gewichtsteile der wärmeleitfähigen Metallpartikel umfasst und den Alkohol in einer Menge von 50 bis 460 Gewichtsteilen bezogen auf 100 Gewichtsteile der wärmeleitfähigen Metallpartikel umfasst.

5. Verfahren zur Herstellung eines Films nach Anspruch 1, bei dem die poröse Metallschicht mit einer Dicke von 1 µm bis 500 µm gebildet wird.

6. Verfahren zur Herstellung eines Films nach Anspruch 1, bei dem die poröse Metallschicht mit einer durchschnittlichen Porengröße von 1 nm bis 100 µm gebildet wird.

7. Verfahren zur Herstellung eines Films nach Anspruch 1, bei dem die poröse Metallschicht mit einer Porositätsrate von 30% oder mehr gebildet wird.

8. Verfahren zur Herstellung eines Films nach Anspruch 1, bei dem das Metallsubstrat ein Eisensubstrat, ein SUS-Substrat, ein Kupfersubstrat, ein Goldsubstrat, ein Aluminiumsubstrat, ein Silbersubstrat, ein Nickelsubstrat, ein Molybdänsubstrat, ein Platinsubstrat oder ein Magnesiumsubstrat ist.

9. Verfahren zur Herstellung eines Wärmerohrs, umfassend einen Schritt des Verbindens der Kanten der Metallsubstrate von zwei Filmen (100), die nach dem Verfahren gemäß Anspruch 1 hergestellt wurden, in einem Zustand, in dem die Filme so positioniert sind, dass die porösen Metallschichten, die auf den jeweiligen Filmen gebildet sind, einander zugewandt sind.

## Revendications

1. Procédé de production d'un film comprenant une étape d'impression en dessins d'une pâte épaisse sur un substrat métallique et le frittage de la pâte épaisse imprimée en dessins pour former une couche métallique poreuse sur le substrat métallique,
où la pâte épaisse comprend des particules métalliques thermoconductrices, un liant et un alcool ;
où le liant est un au moins sélectionné dans le groupe consistant en une alkylcellulose, un poly(carbonate d'alkylène), un poly(alcool vinylique) et un poly(acétate de vinyle) ;
où l'alcool est un alcool monohydrique ayant 1 à 20 atome(s) de carbone,
où la pâte épaisse comprend le liant à une quantité de 5 à 200 parties en poids pour 100 parties en poids des particules métalliques thermoconductrices ; et
où la pâte épaisse comprend l'alcool à une quantité de 10 à 500 parties en poids pour 100 parties en poids des particules métalliques thermoconductrices.

2. Procédé de production d'un film selon la revendication 1, où les particules métalliques thermoconductrices sont une quelconque ou un mélange de deux ou plus sélectionnées dans le groupe consistant en des particules de fer, des particules de cobalt, des particules de cuivre, des particules d'or, des particules d'aluminium, des particules d'argent, des particules de nickel, des particules de molybdène, des particules de platine et des particules de magnésium.

3. Procédé de production d'un film selon la revendication 1, où le diamètre particulaire moyen des particules métalliques est dans une plage de 100 nm à 200 µm.

4. Procédé de production d'un film selon la revendication 1, où la pâte épaisse comprend le liant à une quantité de 25 à 160 parties en poids pour 100 parties en poids des particules métalliques thermoconductrices et comprend l'alcool à une quantité de 50 à 460 parties en poids pour 100 parties en poids des particules métalliques thermoconductrices.

5. Procédé de production d'un film selon la revendication 1, où la couche métallique poreuse formée a une épaisseur qui va de 1 µm à 500 µm.

6. Procédé de production d'un film selon la revendication 1, où la couche métallique poreuse formée a des pores d'une taille moyenne qui va de 1 nm à 100 µm .

7. Procédé de production d'un film selon la revendication 1, où la couche métallique poreuse formée a un taux de porosité égal ou supérieur à 30 %.

8. Procédé de production d'un film selon la revendication 1, où le substrat métallique est un substrat en fer, un substrat en acier inoxydable SUS, un substrat en cuivre, un substrat en or, un substrat en aluminium, un substrat en argent, un substrat en nickel, un substrat en molybdène, un substrat en platine ou un substrat en magnésium.

9. Procédé de fabrication d'un tube de chauffe comprenant une étape d'assemblage des bordures des substrats métalliques de deux films (100) produits conformément au procédé de la revendication 1 dans un état dans lequel les films sont positionnés de manière que les couches métalliques poreuses formées sur les films respectifs se font face.
